# EUROPÄISCHE PATENTANMELDUNG

(11) **EP 4 086 190 A1**
(43) Veröffentlichungstag der Anmeldung: **09.11.2022**
(21) Anmeldenummer: 21171886.1
(22) Anmeldetag: 03.05.2021
(51) Int. Cl.: B65D 83/38, F16J 15/10, F16J 15/328

(54) **DRUCKSPEICHER, DICHTELEMENT HIERFÜR UND VERFAHREN ZU DEREN HERSTELLUNG**

(71) Anmelder: Aptar Radolfzell GmbH, 78315 Radolfzell (DE)
(72) Erfinder: Alagia, Pierluigi, 78345 Moos (DE); Greiner-Perth, Jürgen, 78244 Gottmadingen (DE); Hötz, Jörg, 78234 Engen (DE)
(74) Vertreter: Witte, Weller und Partner Patentanwälte mbB Stuttgart

(57) **Zusammenfassung**

Bekannt sind Druckspeicher (10) für Flüssigkeitsspender, insbesondere für kosmetisch oder pharmazeutische Flüssigkeiten. Ein solcher Druckspeicher (10) weist einen Hüllenkörper (20) auf, an dessen oberen Ende eine Öffnung (22) vorgesehen ist, die von einem Crimpwulst (24) umgeben ist. Der Druckspeicher weist weiterhin einen Crimpdeckel (30) auf, der von einer Auslassöffnung (36) durchdrungen ist und der mittels eines Crimprandes (32) mit dem die Öffnung (22) des Hüllenkörpers (20) umgebenden Crimpwulst (24) umlaufend vercrimpt ist. Zwischen einer Innenseite des Crimprandes (32) und einer Außenseite des Crimpwulstes (24) ist ein umlaufender Aufnahmeraum (40) vorgesehen, innerhalb dessen ein Dichtelement (50) vorgesehen ist.

Es wird vorgeschlagen, dass sich das Dichtelement zum überwiegenden Teil im Außenbereich (44) des Aufnahmeraums (40) befindet. Dieser Außenbereich (44) ist ein äußerer Bereich des Aufnahmeraums (40), der sich nach außen hin verjüngt.

## Beschreibung

### ANWENDUNGSGEBIET UND STAND DER TECHNIK

Die Erfindung betrifft einen Druckspeicher für einen Flüssigkeitsspender, insbesondere für kosmetisch oder pharmazeutische Flüssigkeiten. Die Erfindung betrifft dabei insbesondere die Abdichtung dieses Druckspeichers zwischen einem Hüllenkörper und einem den Hüllenkörper unter Bildung eines Druckraums verschließenden Crimpdeckel. In diesem Kontext betrifft die Erfindung weiterhin ein zum Zwecke der Abdichtung vorgesehenes Dichtelement sowie hiermit im Zusammenhang stehende Verfahren zur Herstellung des Druckspeichers und des Dichtelements.

Bei gattungsgemäßen Druckspeichern ist vorgesehen, dass die zum Austrag vorgesehene Flüssigkeit im Druckraum des Druckspeichers unter Druck gelagert wird. Dies umfasst sowohl Gestaltungen, bei denen die Flüssigkeit und komprimiertes Gas zusammen in einem gemeinsamen Raum angeordnet sind, also auch Beutelsysteme, bei denen die Flüssigkeit in einem Beutel vorgehalten wird und das komprimierte Gas außerhalb dieses Beutels zwischen Beutel und Innenwandung des Hüllenkörpers vorgehalten wird.

Damit ein Austrag der Flüssigkeit langfristig möglich bleibt, ist eine lang wirksame Abdichtung zwischen dem Hüllenkörper und dem Crimpdeckel gewünscht. Weiterhin ist es vorteilhaft, wenn die Verbindung des Crimpdeckels und des Hüllenkörpers und die Abdichtung durch das Dichtelement einen hohen Überdruck im Druckspeicher gestatten, ohne aufgrund dieses Überdrucks zu versagen. Ein hoher Überdruck ist zum einen wertvoll, um ausreichend lange einen für den Austrag ausreichenden Überdruck aufrecht zu erhalten. Weiterhin gestattet es ein hoher Überdruck, die Flüssigkeit in Form eines besonders feinen Tröpfchennebels auszutragen. Dies ist beispielsweise bei Flüssigkeiten wichtig, die inhaliert werden und bis in die Lunge gelangen sollen.

### AUFGABE UND LÖSUNG

Aufgabe der Erfindung ist es, einen Druckspeicher sowie ein Dichtelement hierfür zur Verfügung zu stellen, die einen hohen Überdruck und/oder lang anhaltende Dichtigkeit ermöglichen. Aufgabe der Erfindung ist es weiterhin, korrespondierende Herstellungsverfahren zur Verfügung zu stellen.

Erfindungsgemäß wird hierfür ein Druckspeicher für einen Flüssigkeitsspender vorgeschlagen. Dieser Druckspeicher findet vorzugweise Anwendung als Teil eines Flüssigkeitsspeichers, der neben dem Druckspeicher auch über einen Austragkopf verfügt. Dieser Austragkopf kann im einfachsten Falle durch einen niederdrückbaren Betätigungsdrücker gebildet werden, dessen Oberseite eine Kraftbeaufschlagungsfläche bildet und an welchem eine Austragöffnung vorgesehen ist. Wird der Betätigungsdrücker niedergedrückt, so öffnet er ein in den Druckspeicher integriertes Auslassventil auf, so dass die druckbeaufschlagte Flüssigkeit aus dem Druckspeicher das Auslassventil passieren kann, in den Austragkopf einströmen kann und von hierdurch die Austragöffnung ausgetragen wird.

Der Druckspeicher weist einen Hüllenkörper und einen diesen im Bereich einer Öffnung verschließenden Crimpdeckel auf. Der Hüllenkörper ist vorzugsweise aus Metall hergestellt, insbesondere aus Aluminium oder Stahl. Es sind jedoch auch Hüllenkörper aus Kunststoff wie PET verwendbar. Der Crimpdeckel ist vorzugsweise aus Metall hergestellt, insbesondere vorzugsweise aus Aluminium.

Der Crimpdeckel ist dafür vorgesehen, den Hüllenkörper im Bereich einer Öffnung zu verschließen, die an dessen oberen Ende vorgesehen ist. Der Crimpdeckel weist eine Auslassöffnung auf. Vorzugsweise ist am Crimpdeckel eine Ventileinrichtung vorgesehen, mittels derer die Auslassöffnung geöffnet und geschlossen werden kann.

Die genannte Öffnung des Hüllenkörpers ist von einem Crimpwulst umgeben. Insbesondere handelt es sich hier um einen metallischen Endabschnitt, der derart umgeformt ist, dass er im Querschnitt eine Kreissegmentform aufweist.

Der Crimpdeckel ist dafür vorgesehen, die Öffnung zu verschließen, indem er umlaufend mit dem Crimpwulst vercrimpt wird. Vorzugsweise weist der Crimpdeckel hierfür einen Crimprand auf, der in Richtung des Hüllenkörpers gerichtet eine Crimpnut aufweist, die auf den Crimpwulst aufgeschoben wird.

Das Vercrimpen des Crimpdeckels am Crimpwulst kann insbesondere auf zwei Arten erfolgen, die jedoch auch kombinierbar sind. Eine Möglichkeit besteht darin, dass ein Teil des Crimprandes an der Außenseite der genannten Crimpnut unterhalb des Crimpwulstes umlaufend nach innen gedrückt wird. Eine zweite Möglichkeit, die im Kontext der vorliegenden Erfindung besonders relevant ist, besteht darin, dass ein Teil des Crimprandes der innenseitig der Crimpnut vorgesehen ist, der unterhalb des Crimpwulstes umlaufend nach außen gedrückt wird.

Um den zwischen der Unterseite des Crimprandes bzw. der Innenseite der dortigen Crimpnut einerseits und der Oberseite des Crimpwulstes verbleibenden Spalt dicht zu verschließen, ist in dem hier durch die Innenseite des Crimprandes und die Außenseite des Crimpwulstes gebildeten Aufnahmeraum ein Dichtelement angeordnet. Dieses Dichtelement besteht aus einem elastisch verformbaren und komprimierbaren Material wie einem Elastomer. Das Dichtelement liegt nach der Montage des Druckspeichers zwischen an einer Unterseite des Crimprandes und an einer Oberseite des Crimpwulstes dichtend an.

Damit dieses Dichtelement den genannten Spalt langfristig und auch bei hohem Überdruck im Druckspeicher sicher verschließt, ist vorgesehen, dass das Dichtelement sich zumindest zum überwiegenden Teil in einem Außenbereich des Aufnahmeraums befindet.

Der Aufnahmeraum, der sich von einem innenseitigen Annäherungsbereich von Crimpwulst und Crimpdeckel bis zu einem außenseitigen Annäherungsbereich von Crimpwulst und Crimpdeckel erstreckt, weist einen innenliegenden und sich nach außen aufweitenden Innenbereich und einen außenliegenden und einen sich nach außen verjüngenden Außenbereich auf. Der Bereich innerhalb des Aufnahmeraums, in welchem der Crimpdeckel maximal vom Crimpwulst beabstandet ist, bildet die Grenzlinie zwischen dem Innenbereich und dem Außenbereich.

Das Dichtelement ist erfindungsgemäß zum überwiegenden Teil im Außenbereich des Aufnahmeraums angeordnet. Hierunter ist zu verstehen, dass mehr als 50% der Masse des Dichtelements sich im Außenbereich befinden, vorzugsweise mehr als 60%, insbesondere vorzugsweise mehr als 70%.

Die Anordnung des Dichtelements im Außenbereich bewirkt, dass der Überdruck im Druckspeicher dazu neigt, das Dichtelement weiter in den Außenbereich zu drücken. Es stellt sich somit eine durch Überdruck verstärkende Dichtwirkung ein.

Insbesondere ist es bevorzugt, wenn die Dichtlinien oder Dichtflächen, entlang derer das Dichtelement umlaufend an der Innenseite des Crimprandes bzw. umlaufend an einer Außenseite des Crimpwulstes anliegt, sich im Außenbereich des Aufnahmeraums befindet. Der zwischen diesen Dichtlinien oder Dichtflächen vom Innenbereich des Aufnahmeraums aus auf die Dichtung wirkende Druck drückt hierdurch das Dichtelement besonders wirksam in Richtung des den Aufnahmeraum außen begrenzenden Annäherungsbereich und verstärkt die Dichtwirkung.

Von besonderer Bedeutung ist dies, wenn der Formschluss zwischen dem Crimpdeckel und dem Crimpwulst hergestellt ist, indem der Crimprand von innen unterhalb des Crimpwulstes nach außen gedrückt ist. Bei dieser Art des Vercrimpens sorgt die innenseitige Crimpaufweitung dafür, dass äußere Teile des Crimprandes und insbesondere im Bereich der Crimpnut, die den Aufnahmeraum begrenzt, nach innen gezogen werden und somit das Dichtelement tendenziell in den Innenbereich des Aufnahmeraums ziehen. Ist das Dichtelement vor dem Crimpen gleichermaßen im Außenbereich und im Innenbereich angeordnet, so kann es durch den Crimpvorgang in den Innenbereich gezogen werden. Dies würde die Dichtwirkung verschlechtern, da der Druck das überwiegend im Innenbereich angeordnete Dichtelement und die dortigen Dichtlinien bzw. Dichtflächen in Richtung des Außenbereichs und somit in einen weiter aufgeweiteten Teil des Innenbereichs drücken würde. Hierbei wäre die Gefahr eines Verlustes der Dichtigkeit hoch. Daher ist es insbesondere bei dem beschriebenen Crimpverfahren mit innenseitigem Crimpen von Vorteil, wenn das Dichtelement weit im Außenbereich positioniert ist.

Der Druckspeicher ist zur Aufnahme einer auszutragenden Flüssigkeit vorgesehen. Er ist daher vorzugsweise mit einer pharmazeutischen Flüssigkeit wie bspw. einer Inhalationsflüssigkeit oder mit einer kosmetischen Flüssigkeit wie einem Deodorant befüllt. Es sind jedoch auch andere Anwendungen umfasst. So kann insbesondere ein erfindungsgemäßer Druckspeicher auch zur Aufnahme und Abgabe von Lebensmitteln oder technischen Flüssigkeiten wie Lacken oder Ölen Verwendung finden.

Die Flüssigkeit kann zusammen mit einem komprimierten Gas unmittelbar in dem durch den Hüllenkörper definierten Innenraum angeordnet sein. Alternativ kann innerhalb des Hüllenkörpers ein Beutel angeordnet sein, der die Flüssigkeit aufnimmt und mit dem Auslassöffnung in Verbindung steht, während das komprimierte Gas zwischen einer Außenseite des Beutels und einer Innenseite des Hüllenkörpers vorgesehen ist.

Vorzugsweise ist das Dichtelement von nachfolgend beschriebener Art.

Ein solches erfindungsgemäßes Dichtelement ist aus einem elastisch verformbaren Material, insbesondere einem Kunststoff gefertigt. Das Dichtelement ist als ringförmiges Dichtelement ausgebildet, welches mit einer Innenkontur einen freien Ringinnenraum definiert und dessen vom Ringinnenraum weg weisende Außenfläche eine Außenkontur des Dichtelements bildet.

Der Querschnitt durch das Dichtelement weist einen innenliegenden Innenteil und einen außenliegenden Außenteil auf. Der Innenteil weist in Richtung des Ringinnenraums. Der Außenteil weist dem entgegengesetzt nach außen. Eine Grenzlinie zwischen dem Innenteil und dem Außenteil im Sinne dieser Erfindung wird durch einen mittleren Durchmesser zwischen einem minimalen Innendurchmesser an der Innenkontur und einem maximalen Au ßendurchmesser an der Außenkonturgebildet.

Beträgt der minimale Innendurchmesser an der Innenkontur bspw. 20 mm und der maximale Außendurchmesser an der Außenkontur bspw. 24 mm, so trennt eine gedachte zylindrische Grenzfläche mit einem Durchmesser von 22 mm den Innenteil und den Außenteil im Sinne dieser Erfindung.

Ein erfindungsgemäßes Dichtelement weist eine Gestaltung auf, die begünstigt, dass die Dichtlinien bzw. Dichtflächen, entlang derer das Dichtelement im Aufnahmeraum eines Druckspeichers am Crimpdeckel und dem Crimpwulst anliegt, sich im Außenbereich des Aufnahmeraums befinden.

Dabei sind verschiedene Gestaltungsmöglichkeiten gegeben, die auch in Kombination vorgesehen sein können.

Bei einer ersten Gestaltungsmöglichkeit ist vorgesehen, dass der Außenteil eine größere maximale Dicke als der Innenteil aufweist. Bei einerzweiten Gestaltungsmöglichkeit ist vorgesehen, dass der Außenteil eine höhere mittlere Dichte und/oder ein höheres mittleres E-Modul als der Innenteil aufweist. Bei einer dritten Gestaltungsmöglichkeit ist vorgesehen, dass im Innenteil umfänglich angeordnete nach innen weisende und voneinander beabstandete Halteabschnitte vorgesehen sind, im Bereich derer ein Innendurchmesser geringer ist als im Bereich von zwischen den Halteabschnitten vorgesehenen Freibereiche.

Bei der ersten Gestaltungsmöglichkeit ist ein dickerer Außenteil mit einem dünneren Innenteil kombiniert. Dies führt dazu, dass sich primär der dickere Außenteil an den Crimpdeckel und an den Crimpwulst anlegt, so dass die genannten Dichtlinien bzw. Dichtflächen im Außenbereich vorzufinden sind und sich daher die oben beschriebene verstärkende Dichtwirkung unter Überdruck einstellt.

Die Formgebung eines solchen Dichtelements gemäß der ersten genannten Gestaltungsmöglichkeit kann beispielsweise dergestalt sein, dass das Dichtelement an einer Unterseite und/oder an einer Oberseite eine konische Formgebung und/oder eine gestufte Formgebung aufweist, die zu einem sich nach außen aufweitenden Querschnitt führt. Auch ist eine Gestaltung möglich, bei der der Außenteil einen torusförmigen Abschnitt oder einen überwiegenden Teil des torusförmigen Abschnitts aufweist, während der Innenbereich einen mit dem torusförmigen Abschnitt verbundenen Haltering aufweist, dessen Dicke geringer als die Dicke des torusförmigen Abschnitts ist. Der Haltering ist dabei für die Dichtwirkung nachrangig. Seine Funktion besteht insbesondere darin, die Handhabung des Dichtelements während der Montage zu vereinfachen, indem er an einer inneren Ringfläche des Crimpdeckels reibschlüssig anliegt, wenn der Crimpdeckel mit dem Hüllenkörper verbunden wird.

Der Außenabschnitt weist vorzugsweise einen Außendurchmesser auf, mittels dessen er ebenfalls reibschlüssig an einer nach innen weisenden Ringfläche des Crimpdeckels reibschlüssig anliegt.

Bei der zweiten Gestaltungsmöglichkeit ist vorgesehen, dass der Außenteil eine höhere mittlere Dichte und/oder ein höheres mittleres E-Modul als der Innenteil aufweist. Dadurch zeigt der Innenteil eine höhere Neigung zur Komprimierung und kann somit leichter durch den Flüssigkeitsdruck ausgelenkt oder komprimiert werden, so dass in Folge dessen die genannten Dichtlinien bzw. Dichtflächen sich wiederum vorrangig im Außenbereich des Aufnahmeraums einstellen.

Die Variationen hinsichtlich der Dichte bzw. des E-Moduls können bei einheitlichem Material durch den jeweiligen Aufbau bewirkt werden. So kann beispielsweise eine partiell schaumartige Struktur des Innenteils dort die Dichte bzw. das E-Modul verringern.

Besonders vorteilhaft ist es jedoch, wenn das Dichtelement aus mindestens zwei Materialen hergestellt ist, wobei ein den Innenbereich überwiegend bildendes Material vorzugsweise ein geringeres E-Modul und/oder eine geringere Dichte als das den Außenbereich überwiegend bildende Material aufweist. Zur Herstellung eines solchen Dichtelements aus mindestens zwei Materialen findet vorzugsweise Mehrkomponentenspritzguss Anwendung, so dass die beiden Materialien stoffschlüssig miteinander verbunden sind.

Die dritte Gestaltungsmöglichkeit sieht vor, dass am Dichtelement zungenartige Halteabschnitte vorgesehen sind, die nach innen weisen und die somit zumindest überwiegend dem Innenteil des Dichtelements zuzurechnen sind. Vorzugsweise sind zwischen drei und acht solcher nach innen weisender Halteabschnitte vorgesehen. Diese Halteabschnitte können dem Zweck dienen, zum Zwecke der vereinfachten Montage reibschlüssig an der genannten inneren Ringfläche anzuliegen.

Da die Halteabschnitte umlaufend durch die Freibereiche unterbrochen sind, kann der im Druckspeicher herrschende Druck im Bereich der Haltebereiche nach außen gelangen und wirkt dann in der gewünschten Weise primär auf den Außenteil, der sich vorzugsweise im Außenbereich des Aufnahmeraums befindet.

Die Montage eines erfindungsgemäßen Druckspeichers erfolgt erfindungsgemäß wie folgt: Ausgehend von einem Hüllenkörper, an dessen oberen Ende eine Öffnung vorgesehen ist, die von einem Crimpwulst umgeben ist, einem Crimpdeckel, der im Bereich eines Crimprandes eine in Richtung des Crimpwulstes offene umlaufende Crimpnut aufweist, und einem Dichtelement der beschriebenen Art wird das Dichtelementzunächst in die Crimpnut eingefügt. Dies erfolgt vorzugsweise derart, dass das Dichtelement an einer außenseitigen oder einer innenseitigen Fläche der Crimpnut reibschlüssig gehalten wird. Insbesondere kann das Dichtelementjedoch auch so auf die Crimpnut abgestimmt sein, dass es mit seinem Außenteil kraftschlüssig an der nach innen weisenden Fläche der Crimpnut hält und mit seinem Innenteil, insbesondere den oben beschriebenen Halteabschnitten, reibschlüssig an der nach außen weisenden Fläche der Crimpnut hält.

Der Crimpdeckel mitsamt dem darin gehaltenen Dichtelement wird dann auf den Crimpwulst des Hüllenkörpers aufgesetzt. Hierbei gelangt das Dichtelement in Kontakt mit dem Crimpwulst und wird zwischen Crimpwulst und Crimpnut zusammengedrückt. Anschließend erfolgt der Crimpvorgang durch Verformung des Crimpdeckels, wobei dies in oben bereits geschilderter Weise innenseitig durch eine nach außen gerichtete Aufweitung oder außenseitig durch eine nach innen gerichtete einschnürende Verformung erfolgen kann.

Die Erfindung betrifft weiterhin auch ein Verfahren zur Herstellungeines Dichtelements, nämlich des oben beschriebenen Dichtelements, bei dem vorgesehen ist, dass zungenartige nach innen weisende Halteabschnitte vorgesehen sind. Zur Herstellung solcher Dichtelemente wird ein Verfahren vorgeschlagen, bei dem zunächst ein Schlauchkörper aus einem elastischen Material hergestellt wird. Dieser Schlauchkörper verfügt an einer Innenseite über in einer Längsrichtung erstreckte Haltestränge, im Bereich derer ein Innendurchmesser des Schlauchkörpers geringer ist als im Bereich von zwischen den Haltesträngen vorgesehenen Nuten. Vorzugsweise sind zwischen drei und acht solcher Haltestränge und dementsprechend ebenso viele Nuten vorgesehen. Der Schlauchkörper wird dann anschließend quer zu seiner Längsrichtung geschnitten. Hierbei entstehen voneinander getrennte Scheiben. Diese bilden die Dichtelemente oder werden mittels weiterer Verarbeitungsschritte zu Dichtelementen weiterverarbeitet. Das beschriebene Verfahren ist kostengünstig und insbesondere für die Massenfertigung gut geeignet.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1A und 1B zeigen einen erfindungsgemäßen Flüssigkeitsspender mit einem erfindungsgemäßen Druckspeicher in einer Gesamtansicht bzw. die Einzelkomponenten vor der Montage.
Fig. 2A bis 2C zeigen in geschnittener Darstellung den Montagevorgang bei einem Druckspeicher gemäß Stand der Technik.
Fig. 3A bis 3C zeigen in geschnittener Darstellung die Herstellung einer ersten erfindungsgemäßen Gestaltung der dichtenden Verbindung zwischen dem Hüllenkörper und dem Crimpdeckel des Druckspeichers.
Fig. 4A bis 4D zeigen Details der dichtenden Crimpverbindung zwischen dem Hüllenkörper und dem Crimpdeckel des Druckspeichers gemäß Fig. 3C.
Fig. 5A bis 5C zeigen in geschnittener Darstellung die Herstellung einer zweiten erfindungsgemäßen Gestaltung der dichtenden Verbindung zwischen dem Hüllenkörper und dem Crimpdeckel des Druckspeichers.
Fig. 6A und 6B zeigen Details derdichtenden Crimpverbindungzwischen dem Hüllenkörperund dem Crimpdeckel des Druckspeichers gemäß Fig. 5C.
Fig. 7 bis 16 zeigen verschiedene Gestaltungen erfindungsgemäßer Dichtelemente.
Fig. 17 verdeutlicht eine Herstellungsmethode zur Herstellung eines Dichtelements gemäß Fig. 7.

### DETAILLIERTE BESCHREIBUNG DER AUSFÜHRUNGSBEISPIELE

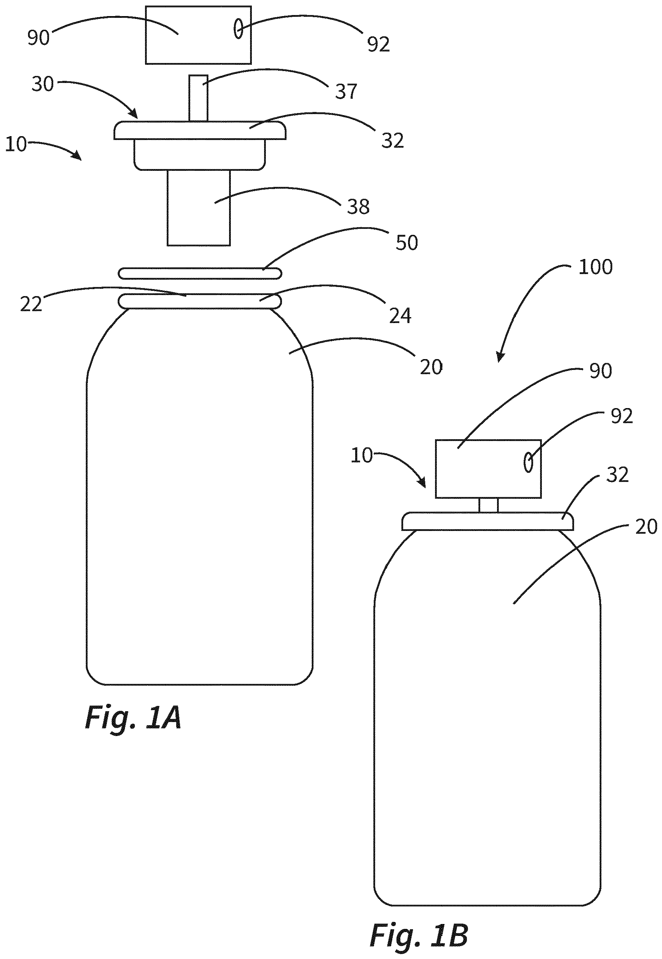

Die Fig. 1A und 1B zeigen einen erfindungsgemäßen einen Flüssigkeitsspender 100 und dessen Druckspeicher 10. Der Druckspeicher 10 weist einen Hüllenkörper20 auf, der an seinem oberen Ende über eine Öffnung 22 verfügt. Der Hüllenkörper ist vorzugsweise aus Metall hergestellt, kann aber auch aus einem ausreichend druckstabilen Kunststoff hergestellt sein. Im Bereich der Öffnung 22 ist die Wandung des Hüllenkörpers zur Bildung eines Crimpwulstes 24 umgebogen.

Zum Zwecke des Verschließens dieser Auslassöffnung ist ein metallischer Crimpdeckel 30 vorgesehen, der über einen Crimprand 32 verfügt, welcher bestimmungsgemäß mit dem Crimpwulst 24 des Hüllenkörpers 20 vercrimpt wird. Zwischen dem Crimpwulst 24 und dem Crimprand 32 wird dabei ein Dichtelement 50 eingefügt, welches den Innenraum des Druckspeichers 10 gegenüber einer Umgebung isoliert und welches zu diesem Zwecke in der Lage sein muss, trotz des im Druckspeicher 10 herrschendes Druckes die Abdichtung zu gewährleisten.

Der Flüssigkeitsspender 100 weist neben dem Druckspeicher 10 auch einen Austragkopf 90 auf, der beim vorliegenden Beispiel sehr einfach ausgebildet ist und lediglich einen Betätigungsdrücker 90 umfasst, der auf einen Ventilstutzen 37 einer Ventileinrichtung 38 aufgesetzt ist, so dass durch Niederdrücken des Betätigungsdrückers 90 die Ventileinrichtung 38 geöffnet wird und Flüssigkeit durch die Austragöffnung 92 hindurch ausströmen kann.

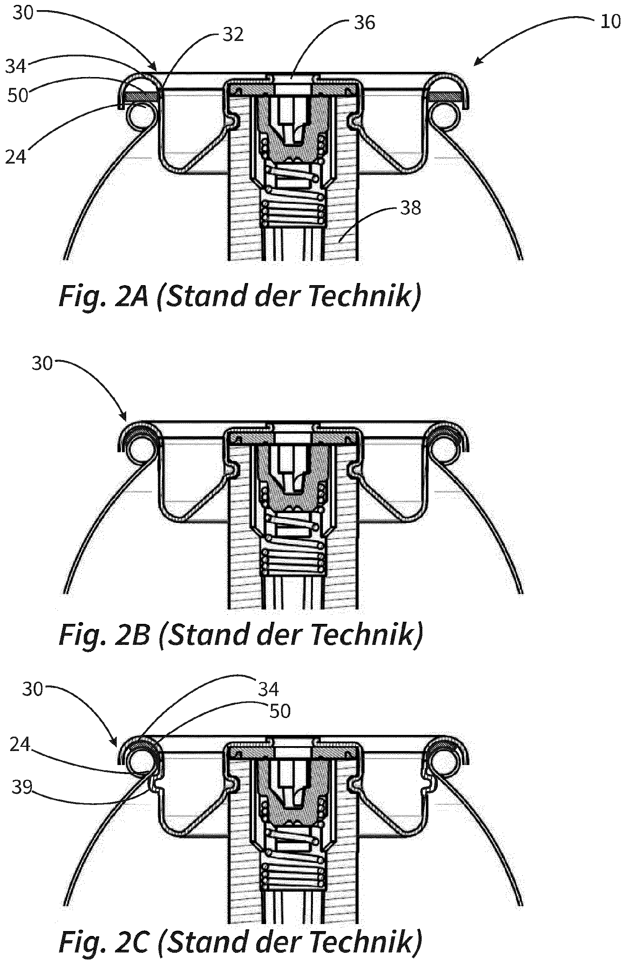

Die Fig. 2A bis 2C zeigen den Crimpvorgang zum Verschließen des Druckspeichers 10, wie er derzeit üblich ist. Hierbei findet exemplarisch ein Dichtelement 50 in Form eines flachen Dichtrings Verwendung. Dieser wird in einem Bereich zwischen der Oberseite des Crimpwulstes 24 und der Unterseite des Crimprandes 32 positioniert, insbesondere im Innenraum einer durch den Crimprand 32 gebildeten und nach unten offenen Crimpnut 34. Im Zustand der Fig. 2A sind die Elemente des Crimpdeckels 30 und des Hüllenkörpers 20 in einer Ausgangsstellung. Ausgehend hiervon wird der Crimpdeckel 30 niedergedrückt. In der in den Fig. 2B ersichtlichen Weise wird hierbei das Dichtelement 50 verformt. Ausgehend von dem bereits zusammengedrückten Zustand der Fig. 2B folgt der eigentliche Crimpvorgang. Hierbei wird eine Crimpsicke 39 von innen in die Wandung des Crimprandes 32 eingebracht. Diese Crimpsicke 39 bewirkt einen Formschluss mit der Unterseite des Crimpwulstes 24. Dieser Schritt des Herstellens der Crimpsicke 39 führt dazu, dass die Wandung im Bereich der Crimpnut 34 etwas nach innen gezogen wird und hierbei das Dichtelement 50 mitzieht. Auswirkung dessen ist, dass im gefügten und vercrimpten Zustand der Fig. 2C das Dichtelement 50 tendenziell in einem Innenbereich desAufnahmeraums40 angeordnet ist, derdurch den Crimpwulst 24 und den Crimprand 32 definiert ist.

Diese Position des Dichtelements ist nachteilig. Bei hohem Überdruck im Druckspeicher 10 kann es passieren, dass der Druck das Dichtelement 50 weiter nach außen drückt, so dass es stellenweise den Anlagekontakt zum Crimpwulst 24 oder dem Crimprand 32 verliert. Die Dichtigkeit des Druckspeichers 10 ist dann nicht mehr gegeben.

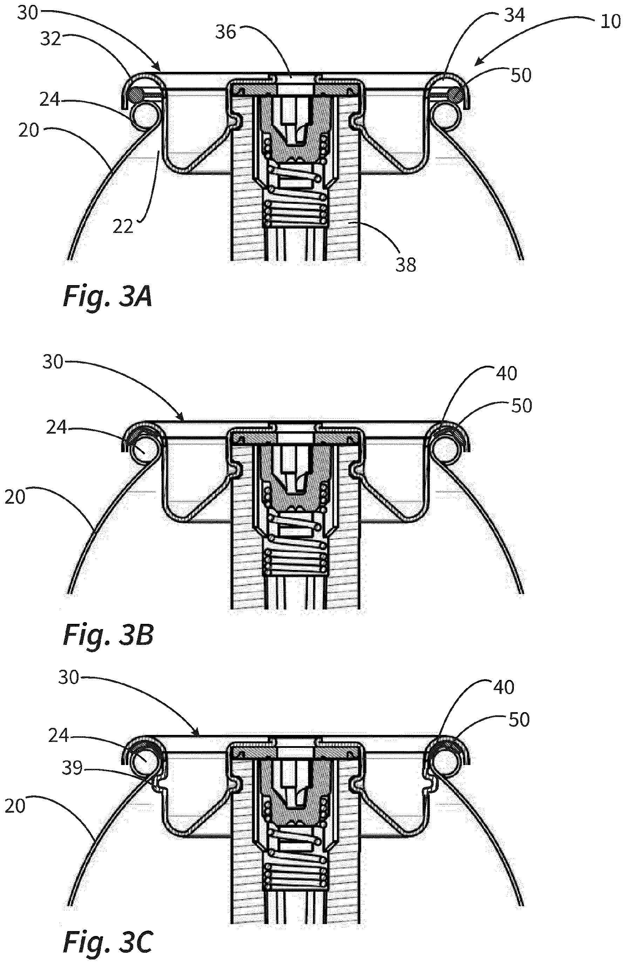

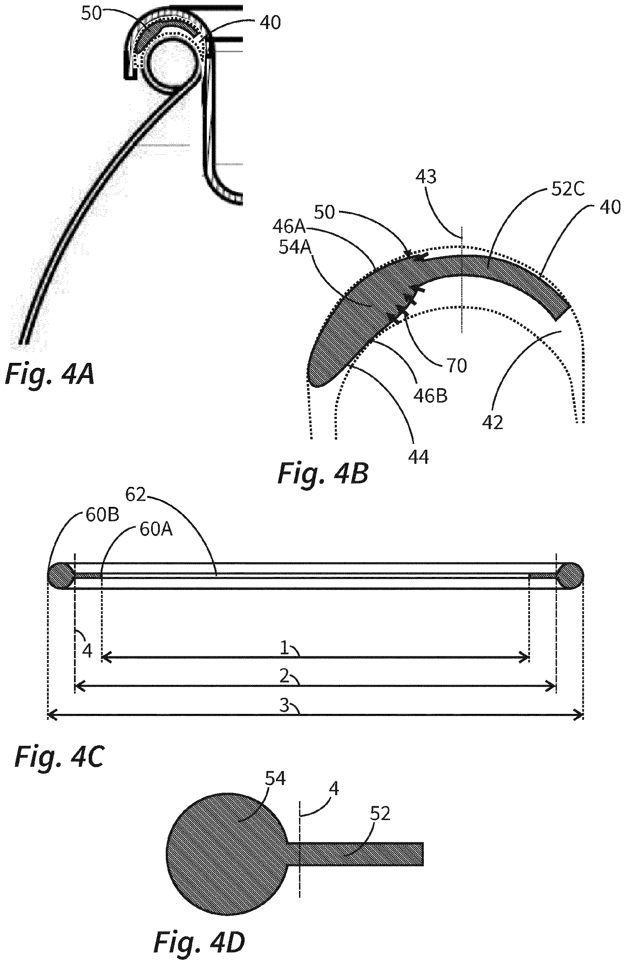

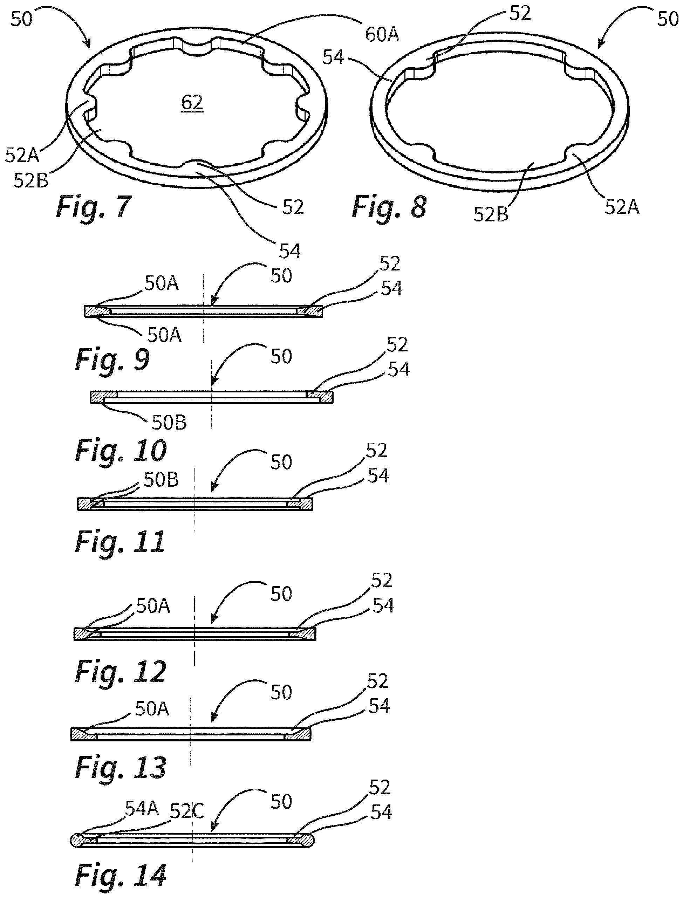

Die Fig. 3A bis 3C zeigen eine erste erfindungsgemäße Gestaltung, um diesem Problem entgegenzuwirken. Bei dieser Gestaltung ist ein Dichtelement 50 vorgesehen, welches primär in einem Außenbereich des Aufnahmeraums 40 angeordnet ist. In Fig. 14 sowie Fig. 4C ist dieses Dichtelement nochmals separat dargestellt. Das Dichtelement 50, welches in diesem Falle vor Komprimierung einen torusförmigen Abschnitt 54A und einen innen liegenden Haltering 52C aufweist, liegt bei der Komprimierung im Zustand der Fig. 3B vor allen Dingen in einem Außenbereich des Aufnahmeraums 40 am Crimpdeckel 30 und am Crimpwulst 24 an. Selbst das geringfügige Einziehen des Dichtelements 50 im Zuge der Einbringung der Crimpsicke 39 führt nicht mehr zu einer Verlagerung des Dichtelements 50 nach innen, durch die dieses überwiegend in dem Innenbereich gezogen würde.

Anhand der Fig. 4A bis 4D ist dies nochmals genauer erläutert. Der Fig. 4B ist zu entnehmen, dass der Aufnahmeraum 40 sich in zwei Bereiche untergliedert. Ein innen liegender Innenbereich 42 erstreckt sich bis zur Grenzlinie 43, welche durch jene Stelle definiert ist, an der der Crimpwulst 24 und die Innenseite der Crimpnut 34 maximal voneinander beabstandet sind. Der Bereich außenseitig dieser Grenzlinie 43 stellt den Außenbereich dar. Wie die Fig. 4A und 4B verdeutlichen, ist das Dichtelement mit seinem ursprünglich torusförmigen Abschnitt 54A überwiegend oder im vorliegenden Falle sogar vollständig im Außenbereich 44 des Aufnahmeraums 40 angeordnet. Wenn nun Druck von innen auf das Dichtelement wirkt, so drückt dieser in der durch die Pfeile 70 verdeutlichten Weise das Dichtelement 50 beziehungsweise dessen für die Abdichtung maßgeblichen torusförmigen Abschnitt54A weiter in den sich zunehmend verengenden Außenbereich 44 des Aufnahmeraums 40. Die Abdichtung wird also durch den Druck noch verstärkt und nicht geschwächt.

Die Fig. 4C und 4D zeigen das in diesem Fall Verwendung findende Dichtelement 50 in separater Darstellung und vor Verformung im Zuge der Montage. Hieraus ist zu ersehen, dass die Dicke des Dichtelements 50 außen größer ist. Zum Zwecke der Definition dessen ist das Dichtelement gedanklich in einen Innenteil und einen Außenteil untergliedert, die durch eine Trennlinie 4 voneinander abgegrenztsind. Der Innenteil ist jener innen liegende Teil zwischen einem minimalen Innendurchmesser des Dichtelements 50 und der Grenzlinie 4. Der Außenteil des Dichtelements 50 ist jener zwischen einem maximalen äußeren Durchmesser undjener Grenzlinie 4.

Die Grenzlinie 4 ist durch einen mittleren Durchmesser 2 definiert, der durch den Mittelwert des minimalen Innendurchmessers 1 und des maximalen Außendurchmessers 3 gebildet wird.

Wie in Fig. 4D zu ersehen ist, ist der Außenteil 54 aufgrund des torusförmigen Abschnitts 54A mit der deutlich größeren Dicke ausgebildet.

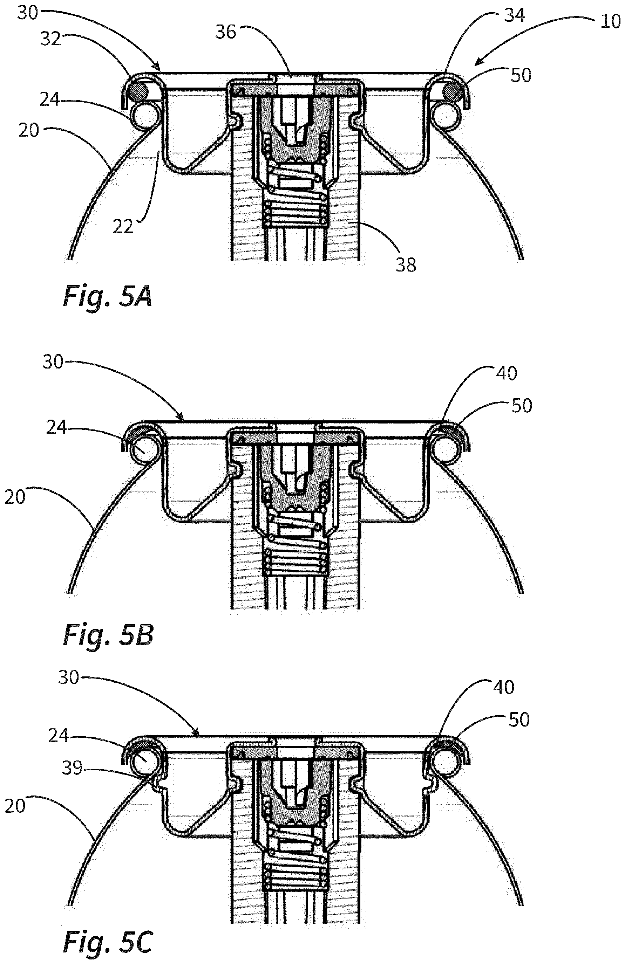

Bei der Gestaltung gemäß der Fig. 5A bis 5C ist das grundsätzliche Abdichtungsprinzip ähnlich wie bei jener der Gestaltung der Fig. 3A bis 3C. Allerdings findet hier ein O-Ring als Dichtelement 50 Verwendung, also ein Dichtelement, welches als solches nicht speziell für die Verwendung bei einem erfindungsgemäßen Druckspeicher ausgebildet sein muss. Dadurch, dass dieser O-Ring einen Außendurchmesser aufweist, der dem Innendurchmesser an einer äußeren Wandung der Crimpnut 34 entspricht, kann er unter Bildung einer reibschlüssigen Haltekraft zunächst in die Crimpnut 34 eingesetzt werden, um anschließend komprimiert zu werden, wie in Fig. 5B dargestellt ist, um beim Einbringen der Crimpsicken 39 dennoch im Außenbereich 44 des Aufnahmeraums 40 zu verbleiben.

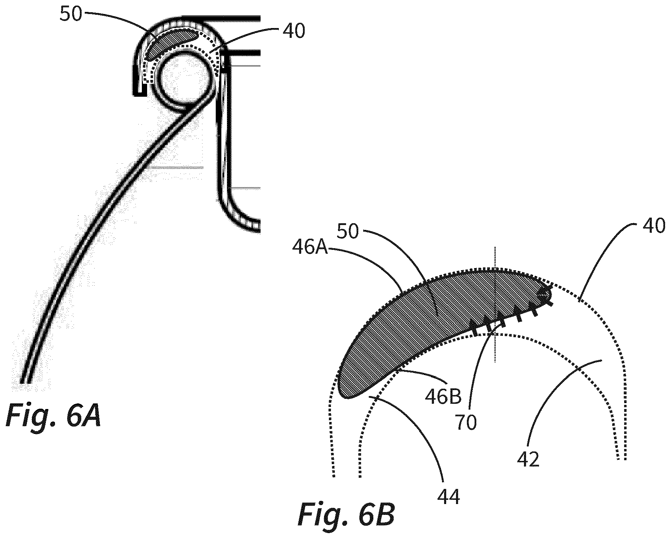

Auch in Hinblick auf die Gestaltung der Fig. 5A bis 5C ist in Fig. 6A und 6B ist die Anordnung des Dichtelements 50 nochmals verdeutlicht dargestellt. Wie sich aus Fig. 6B ersehen lässt, führt auch hier eine Druckbeaufschlagung, wie durch die Pfeile 70 verdeutlicht, tendenziell dazu, dass das Dichtelement 50 tiefer in den sich verjüngenden Außenbereich 44 des Aufnahmeraums 40 hineingedrückt wird.

Die Fig. 7 bis 16 zeigen verschiedene Gestaltungen möglicher Dichtelemente 50.

Die Dichtelemente 50 der Fig. 7 und 8 zeichnen sich dadurch aus, dass ihr Innenteil 52 vorwiegend durch zungenartige nach innen weisende Halteabschnitte 52A gebildet wird. Diese Halteabschnitte 52A erleichtern die Montage durch kraftschlüssigen Halt am Crimpdeckel 30, sind jedoch für die Abdichtung nicht oder von nachrangiger Relevanz. Die Abdichtung findet an einem ringförmigen Außenteil 54 des Dichtelements 50 statt. Die Gestaltung der Fig. 7 und 8 unterscheiden sich voneinander nur durch die Anzahl der jeweils vorgesehenen Halteabschnitte 52A.

Bei der Gestaltung gemäß der Fig. 9 ist vorgesehen, dass der Querschnitt des Dichtelements 50 sich nach außen in Richtung des Außenteils 54 aufweitet. Hierfür sind die Oberseite und die Unterseite mit konischen Formgebungen 50A versehen.

Bei den Gestaltungen der Fig. 10 und 11 sind dagegen einseitig beziehungsweise zweiseitig gestufte Formgebungen 50B vorgesehen, um das Dichtelement 50 im Bereich seines Außenteils aufzuweiten.

Bei den Gestaltungen der Fig. 12 und 13 sind ebenso wie bei der Gestaltung der Fig. 9 konische Flächen an der Oberseite und im Falle der Fig. 12 auch an der Unterseite vorgesehen, durch die der Außenteil 54 des Dichtelements 50 dicker gestaltet ist. Abweichend von der Gestaltung der Fig. 9 erstrecken sich diese konischen Flächen jedoch nicht vom Innendurchmesser bis zum Außendurchmesser des Dichtelements 50. Stattdessen ist innenseitig jeweils noch ein Abschnitt gleichbleibender Dicke vorgesehen.

Fig. 14 zeigt das Dichtelement, das auch bereits in den Fig. 3A bis 4D dargestellt war, welches über einen außenseitigen torusförmigen Abschnitt 54A und einen innenseitigen Haltering 52C verfügt.

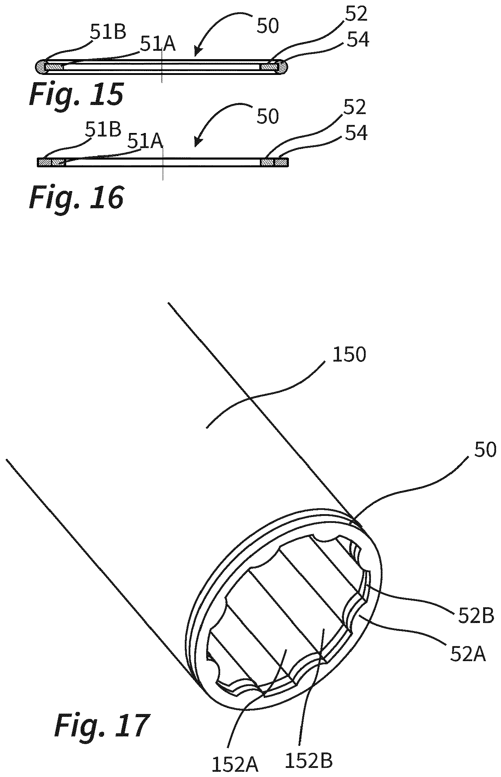

Bei den Gestaltungen der Fig. 15 und 16 ist vorgesehen, dass die Dichtelemente 50 aus zwei unterschiedlichen Materialien 51A,51B bestehen. Das Material 51Afindet dabei insbesondere im Innenteil 52 des Dichtelements 50 Verwendung. Das demgegenüber weniger komprimierbare, härtere Material 51B findet am Außenteil 54 des Dichtelements 50 Verwendung.

Die Fig. 17 zeigt, wie Dichtelemente der in Fig. 7 dargestellten Art einfach hergestellt werden können. Hierfür wird ein Schlauchkörper 150 erstellt, bei dessen Herstellung eine von der Kreisform abweichende Innenkontur erzeugt wird. Diese Innenkontur weist im Wechsel umlaufend Haltestränge 152A und Nuten 152B auf. Durch Schnitte quer zur Haupterstreckungsrichtung des Schlauchkörpers 150 werden die Dichtelemente 50 erzeugt, wobei die Haltestränge 152A die beschriebenen Halteabschnitte 52A der Dichtelemente 50 bilden.

## Patentansprüche

1. Druckspeicher (10) für einen Flüssigkeitsspender, insbesondere für kosmetisch oder pharmazeutische Flüssigkeiten, mit den folgenden Merkmalen:
a. der Druckspeicher (10) weist einen Hüllenkörper (20) auf, an dessen oberen Ende eine Öffnung (22) vorgesehen ist, die von einem Crimpwulst (24) umgeben ist, und
b. der Druckspeicher (10) weist einen Crimpdeckel (30) auf, der von einer Auslassöffnung (36) durchdrungen ist und der mittels eines Crimprandes (32) mit dem die Öffnung (22) des Hüllenkörpers (20) umgebenden Crimpwulst (24) umlaufend vercrimpt ist, und
c. zwischen einer Innenseite des Crimprandes (32) und einer Außenseite des Crimpwulstes (24) ist ein umlaufender Aufnahmeraum (40) vorgesehen, innerhalb dessen ein Dichtelement (50) vorgesehen ist,
**gekennzeichnet durch** die folgenden Merkmale:
d. der Aufnahmeraum (40) weist einen innenliegenden und sich nach außen aufweitenden Innenbereich (42) und einen außenliegenden und einen sich nach außen verjüngenden Außenbereich (44) auf, und
e. das Dichtelement (50) befindetsich zum überwiegenden Teil im Außenbereich (44) des Aufnahmeraums (40).

2. Druckspeicher (10) nach Anspruch 1 mit den folgenden zusätzlichen Merkmalen:
a. eine Dichtlinie (46A) oder eine Dichtfläche (46A), entlang derer das Dichtelement (50) umlaufend an der Innenseite des Crimprandes (32) anliegt, befindet sich im Außenbereich (44) des Aufnahmeraums (40), und/oder
b. eine Dichtlinie (46B) oder eine Dichtfläche (46B), entlang derer das Dichtelement (50) umlaufend an der Außenseite des Crimpwulstes (24) anliegt, befindet sich im Außenbereich (44) des Aufnahmeraums (40).

3. Druckspeicher (10) nach Anspruch 1 oder 2 mit dem folgenden zusätzlichen Merkmal:
a. der Crimprand (32) ist von innen unterhalb des Crimpwulstes (24) nach außen gedrückt, so dass hierdurch eine Formschluss mit dem Crimpwulst (24) hergestellt ist.

4. Druckspeicher (10) nach einem der vorstehenden Ansprüche mit mindestens einem der folgenden zusätzlichen Merkmale:
a. der Hüllenkörper (20) ist aus Metall, insbesondere aus Stahl oder Aluminium, gefertigt, oder
b. der Hüllenkörper (20) ist aus Kunststoff, insbesondere aus PET, gefertigt, und/oder
c. der Crimpdeckel (30) ist aus Metall hergestellt, und/oder
d. am Crimpdeckel (30) ist eine Ventileinrichtung (38) vorgesehen, und/oder
e. im Hüllenkörper ist ein Flüssigkeitsbeutel zur Aufnahme von Flüssigkeit vor dem Austrag angeordnet, und/oder
f. im Druckspeicher ist eine kosmetisch oder eine pharmazeutische Flüssigkeit unter Druck gelagert.

5. Druckspeicher (10) nach einem der vorstehenden Ansprüche mit dem folgenden zusätzlichen Merkmal:
a. das Dichtelement (50) ist nach einem der Ansprüche 6 bis 13 ausgebildet.

6. Ringförmiges Dichtelement (50) aus einem elastisch verformbaren Kunststoff, insbesondere zur Verwendung als Dichtelement eines Druckspeichers nach dem Oberbegriff des Anspruchs 1, insbesondere vorzugsweise als Dichtelement eines Druckspeichers nach einem der Ansprüche 1 bis 5, mit den folgenden Merkmalen:
a. das Dichtelement (50) ist als ringförmiges Dichtelement (50) ausgebildet, welches mit einer Innenkontur (60A) einen freien Ringinnenraum (62) definiert und dessen vom Ringinnenraum (62) weg weisende Fläche eine Außenkontur (60B) bildet, und
b. ein Querschnitt durch das Dichtelement (50) weist einen innenliegenden Innenteil (52) und einen außenliegenden Außenteil (54) auf, wobei eine Grenzlinie (4) zwischen dem Innenteil (52) und dem Außenteil (54) durch einen mittleren Durchmesser (2) zwischen einem minimalen Innendurchmesser (1) an der Innenkontur (60A) und einem maximalen Außendurchmesser (3) an der Außenkontur (60B) gebildet wird.
**gekennzeichnet durch** mindestens eines der folgenden Merkmale:
c. der Außenteil (54) weist eine größere maximale Dicke als der Innenteil (52) auf, und/oder
d. der Außenteil (54) weist eine höhere mittlere Dichte und/oder ein höheres mittleres E-Modul als der Innenteil (52) auf, und/oder
e. im Innenteil (52) sind umfänglich angeordnete nach innen weisende und voneinander beabstandete Halteabschnitte (52A) vorgesehen, im Bereich derer ein Innendurchmesser geringer ist als im Bereich von zwischen den Halteabschnitten vorgesehenen Freibereichen (52B).

7. Ringförmiges Dichtelement (50) nach Anspruch 6 mit dem folgenden Merkmal:
a. der Außenteil (54) weist eine größere maximale Dicke als der Innenteil (52) auf, und/oder.

8. Ringförmiges Dichtelement (50) nach Anspruch 7 mit den folgenden weiteren Merkmalen:
a. das Dichtelement (50) weist an einer Unterseite und/oder an einer Oberseite eine konische Formgebung (50A) und/oder eine gestufte Formgebung (50B) auf, und
b. die konische oder gestufte Formgebung bildet einen sich nach außen aufweitenden Querschnitt.

9. Ringförmiges Dichtelement (50) nach Anspruch 7 oder 8 mit dem folgenden weiteren Merkmal:
a. der Außenteil weist einen torusförmigen Abschnitt (54A) auf und der Innenbereich weist einen mit dem torusförmigen Abschnitt (54A) verbundenen Haltering (52C) auf, dessen Dicke geringer als die Dicke des torusförmigen Abschnitts (54A) ist.

10. Ringförmiges Dichtelement (50) nach Anspruch 6 mit dem folgenden Merkmal:
a. der Außenteil (54) weist eine höhere mittlere Dichte und/oder ein höheres mittleres E-Modul als der Innenteil (52) auf.

11. Ringförmiges Dichtelement (50) nach Anspruch 10 mit dem folgenden weiteren Merkmal:
a. das Dichtelement (50) ist aus mindestens zwei Materialen (51A, 51B) hergestellt, wobei ein den Innenbereich bildendes Material (51A) vorzugsweise ein geringeres E-Modul und/oder eine geringere Dichte als das den Außenbereich bildende Material (51B) aufweist, vorzugsweise mit dem folgenden zusätzlichen Merkmal:
b. das Dichtelement (50) ist durch Mehrkomponentenspritzguss hergestellt, so dass die beiden Materialien (51A, 51B) stoffschlüssig miteinander verbunden sind.

12. Ringförmiges Dichtelement (50) nach Anspruch 6 mit dem folgenden Merkmal:
a. im Innenteil (52) sind umfänglich angeordnete nach innen weisende und voneinander beabstandete Halteabschnitte (52A) vorgesehen, im Bereich derer ein Innendurchmesser geringer ist als im Bereich von zwischen den Halteabschnitten vorgesehenen Freibereichen (52B),
vorzugsweise mit dem zusätzlichen Merkmal:
b. es sind zwischen drei und acht Halteabschnitte (52A) vorgesehen.

13. Flüssigkeitsspender (100) mit den folgenden Merkmalen:
a. der Flüssigkeitsspender (100) weist einen Druckspeicher (10) zurdruckbeaufschlagten Aufnahme von Flüssigkeit vor dem Austrag auf, und
b. der Flüssigkeitsspender (100) weist einen Austragkopf (90) auf, der auf den Druckspeicher (10) aufgesetzt ist und eine Austragöffnung (92) zum Austrag der Flüssigkeit bereitstellt,
**gekennzeichnet durch** das zusätzliche Merkmal:
c. der Druckspeicher (100) ist nach einem der Ansprüche 1 bis 5 ausgebildet.

14. Verfahren zur Herstellung von eines Druckspeichers (10) mit den folgenden Merkmalen:
a. es werden
- ein Hüllenkörper (20), an dessen oberen Ende eine Öffnung (22) vorgesehen ist, die von einem Crimpwulst (24) umgeben ist,
- ein Crimpdeckel (30), der im Bereich eines Crimprandes (32) eine in Richtung des Crimpwulstes (24) offene umlaufende Crimpnut (34) aufweist, und
- ein Dichtelement (50) nach einem der Ansprüche 6 bis 13,
bereitgestellt, und
b. das Dichtelement (50) wird in die Crimpnut (34) eingesetzt, und
c. der Crimpdeckel (30) mit dem Dichtelement (50) wird auf den Crimpwulst (24) des Hüllenkörpers aufgesetzt und dort vercrimpt,
vorzugsweise mit mindestens einem der folgenden zusätzlichen Merkmale:
d. das Dichtelement (50) wird derart in die Crimpnut (34) eingesetzt, dass es an einer innenseitigen und/oder einer außenseitigen Wandung der Crimpnut (34) reibschlüssig hält, und/oder
e. das Vercrimpen des Crimpdeckels (30) mit dem Crimpwulst (24) erfolgt von einer Innenseite aus, wobei der Crimpdeckel (30) unterhalb des Crimpwulstes (24) nach außen gedrückt wird.

15. Verfahren zur Herstellung von Dichtelementen (50) nach Anspruch 12 oder 13 mit den folgenden Merkmalen:
a. es wird ein Schlauchkörper (150) aus einem elastischen Material hergestellt, wobei der Schlauchkörper (150) an einer Innenseite über in einer Längsrichtung erstreckte Haltestränge (152A) verfügt, im Bereich derer ein Innendurchmesser des Schlauchkörpers geringer ist als im Bereich von zwischen den Haltesträngen vorgesehenen Nuten (152B), und
b. derSchlauchkörper (150) wird quer zu seiner Längsrichtung geschnitten, so dass voneinander getrennte Scheiben entstehen, die die Dichtelemente (50) bilden oder zu Dichtelementen weiterverarbeitet werden.
